# EUROPÄISCHE PATENTSCHRIFT

(11) **EP 3 824 249 B1**
(45) Veröffentlichungstag und Bekanntmachung des Hinweises auf die Patenterteilung: **31.08.2022**
(21) Anmeldenummer: 18752421.0
(22) Anmeldetag: 20.07.2018
(51) Int. Cl.: G01D 5/14

(54) **DREHWINKELMESSSYSTEM**
ROTATION ANGLE MEASUREMENT SYSTEM
SYSTÈME DE MESURE D'ANGLE DE ROTATION

(43) Veröffentlichungstag der Anmeldung: 26.05.2021
(73) Patentinhaber: Fraba B.V., 6416 SG Heerlen (NL)
(72) Erfinder: LÖKEN, Michael, 52428 Jülich (DE); HALLERMANN, Florian, 52068 Aachen (DE); VOLKER,Hanno, 52064 Aachen (DE)
(74) Vertreter: terpatent Patentanwälte ter Smitten Eberlein-Van Hoof Rütten Daubert
(86) Internationale Anmeldenummer: PCT/EP2018/069744
(87) Internationale Veröffentlichungsnummer: WO 2020/015834

(56) Entgegenhaltungen:
- DE-A1-102009 004 780
- DE-A1-102011 012 357

## Beschreibung

Die Erfindung betrifft ein Drehwinkelmesssystem zur Erfassung einer Drehbewegung einer Welle, mit einer mit der Welle drehfest verbundenen und die Welle radial umschließenden Rotoreinheit, die mindestens einen Sensormagnet aufweist, einer feststehenden Statoreinheit mit einer radial beabstandet zur Welle angeordneten Multiturn-Sensoreinheit mit mindestens einem Wiegand-Sensor, die zur Erfassung von Wellenumdrehungen funktional mit dem Sensormagnet zusammenwirkt, und mindestens einer magnetischen Abschirmanordnung für den mindestens einen Wiegand-Sensor, die aus einem Material mit einer hohen magnetischen Permeabilität besteht.

Derartige Drehwinkelmesssysteme dienen zur Messung von Drehbewegungen einer Welle und werden vielfach auch als Winkelmesseinrichtung, Drehwinkelsensor oder Drehgeber bezeichnet. Solche Systeme werden insbesondere zur Steuerung und Überwachung von Elektromotoren, insbesondere Servomotoren, in Maschinen, Anlagen oder Fahrzeugen eingesetzt. Eine besondere Rolle spielen dabei kontaktfreie Drehwinkelmesssysteme, beispielsweise optische oder magnetisch-erregte Systeme, da diese aufgrund der verschleißfreien Sensorik eine lange Lebensdauer haben.

Aus der DE 10 2009 019 719 A1 ist beispielsweise ein Magnet-basiertes Drehwinkelmesssystem zur Erfassung der Drehbewegung einer Welle bekannt. Bei Magnet-basierten Drehwinkelmesssystemen wird die Umdrehung der Welle mittels des Messsystems rein magnetisch oder magnetisch-optisch erfasst. Das Messsystem umfasst eine rotierende Rotoreinheit, auf der mehrere Sensormagnete angeordnet sind, und eine feststehende Statoreinheit mit einer radial beabstandet zu der Welle angeordneten Multiturn-Sensoreinheit mit einem Wiegand-Sensor. Die Rotoreinheit ist drehfest mit der Welle verbunden, sodass bei einer Drehung der Welle die Sensormagnete an der feststehenden Multiturn-Sensoreinheit vorbeibewegt werden, wobei das Magnetfeld der Sensormagnete von der Sensoreinheit erfasst wird.

Magnetfeld-Sensoren und, insbesondere, Wiegand-Sensoren sind sehr anfällig für von außen eingeprägte magnetische Störfelder. Bei der Anordnung eines Magnet-basierten Drehwinkelmesssystems unmittelbar an der Antriebswelle eines Elektromotors/-generators oder einer magnetischen Bremse treten daher häufig Messfehler auf, da das von dem Elektromotor/-generator bzw. der magnetischen Bremse erzeugte Magnetfeld durch die im Allgemeinen aus Stahl bestehende Welle in das Drehwinkelmesssystem übertragen wird.

Das aus der DE 10 2009 019 719 A1 bekannte Drehwinkelmesssystem weist daher eine magnetische Abschirmanordnung für den Wiegand-Sensor auf, die aus einem Material mit einer hohen magnetischen Permeabilität besteht. Die magnetische Abschirmanordnung umschließt die Welle radial und ist axial zwischen dem Wiegand-Sensor und einem permanentmagnetischen Ringmagneten angeordnet, der Teil einer Magnet-basierten Singleturn-Sensoreinheit ist. Die offenbarte magnetische Abschirmanordnung dient jedoch primär der Abschirmung des Wiegand-Sensors gegenüber dem von dem Ringmagneten erzeugten Magnetfeld und ermöglicht keine zuverlässige Abschirmung gegenüber entlang der Welle übertragenen Stör-Magnetfeldern.

Die DE102009004780 zeigt einen Sensor zur Detektion magnetischer Felder.

Es stellt sich daher die Aufgabe, ein Drehwinkelmesssystem zu schaffen, das eine exakte und störungsfreie Erfassung der Drehbewegung einer Welle ermöglicht.

Diese Aufgabe wird durch ein Drehwinkelmesssystem zur Erfassung der Drehbewegung einer Welle mit den Merkmalen des Hauptanspruchs 1 gelöst.

Erfindungsgemäß weist die mindestens eine magnetische Abschirmanordnung Abschirmelemente auf, die den mindestens einen Wiegand-Sensor in einer Sagittalebene umschließen, das heißt, dass die Abschirmelemente den Wiegand-Sensor auf der radialen Außenseite und auf der radialen Innenseite sowie auf der axialen Oberseite und auf der axialen Unterseite umschließen. Vorzugsweise sind die Abschirmelemente der Abschirmanordnung miteinander verbunden, sodass die Abschirmelemente in der Sagittalebene einen vollständig geschlossenen Umlauf um den Wiegand-Sensor bilden. Zur Vereinfachung der Montage des Drehwinkelmesssystems kann die Abschirmanordnung jedoch auch separate unverbundene Abschirmelementen aufweisen, wodurch in der Sagittalebene geringe Luftspalte zwischen den Abschirmelementen entstehen, die jedoch die Funktionsweise der magnetischen Abschirmanordnung nicht beeinträchtigen. Der Begriff "umschließen" erfordert folglich kein vollständig geschlossenes Profil der Abschirmanordnung in der Sagittalebene. Dadurch, dass die Abschirmelemente den Wiegand-Sensor in der Sagittalebene umschließen, werden externe magnetische Störfelder, insbesondere entlang der Welle in das Drehwinkelmesssystem eingeprägte Stör-Magnetfelder, über die magnetische Abschirmanordnung um den Wiegand-Sensor herumgeführt. Die Stör-Magnetfelder dringen somit nicht zu dem Wiegand-Sensor vor und verursachen folglich keine Messfehler im Wiegand-Sensor. Das erfindungsgemäße Drehwinkelmesssystem ermöglicht daher eine exakte und störungsfreie Erfassung der Drehbewegung der Welle, insbesondere auch wenn über die Welle starke Stör-Magnetfelder in das Messsystem eingeprägt werden.

Im Falle von zwei oder mehr verbauten Wiegand-Sensor können je nach Anordnung eine, zwei, oder mehr Abschirmanordnungen vorgesehen sein. Die Anzahl der Abschirmanordnungen muss nicht mit der Anzahl der Wiegand-Sensoren übereinstimmen.

Vorzugsweise weist die magnetische Abschirmanordnung ein erstes Abschirmelement auf, das den Wiegand-Sensor auf einer ersten axialen Seite umschließt, und weist die magnetische Abschirmanordnung ein zweites Abschirmelement auf, das den Wiegand-Sensor auf einer der ersten axialen Seite gegenüberliegenden zweiten axialen Seite umschließt. Die zweigeteilte magnetische Abschirmanordnung ermöglicht eine einfache Montage des erfindungsgemäßen Drehwinkelmesssystems, ohne dass hierdurch die Funktionsweise der magnetischen Abschirmanordnung beeinträchtigt wird.

In einer besonders bevorzugten Ausführung der Erfindung ist das erste Abschirmelement feststehend angeordnet und ist das zweite Abschirmelement drehfest mit der Welle verbunden. Das erste Abschirmelement kann beispielsweise auf einfache Weise an einem feststehenden Motorgehäuse oder Statorgehäuse befestigt sein und das zweite Abschirmelement kann auf einfache Weise direkt an der Welle befestigt sein. Dies ermöglicht eine einfache Montage des erfindungsgemäßen Drehwinkelmesssystems.

In einer alternativen Ausführung der Erfindung sind beide Abschirmelemente, also das erste Abschirmelement und das zweite Abschirmelement, feststehend angeordnet und direkt miteinander verbunden. Die gesamte Abschirmanordnung ist somit feststehend ausgebildet. Das Drehwinkelmesssystem weist folglich nur eine geringe rotierende Masse auf, sodass die zu erfassende Welle durch das Drehwinkelmesssystem nur minimal belastet ist.

In einer vorteilhaften Ausführung der Erfindung weist das Drehwinkelmesssystem ein Statorgehäuse auf, das aus einem nicht magnetisierbaren Material besteht und in dem die Statoreinheit und das feststehende erste Abschirmelement angeordnet sind. Vorzugsweise besteht das Statorgehäuse aus einem Kunststoff oder aus Aluminium, wodurch ein leichtgewichtiges Drehwinkelmesssystem ermöglicht wird, das ferner preisgünstig hergestellt werden kann. Die Befestigung des feststehenden ersten Abschirmelements direkt an dem Statorgehäuse erlaubt eine stabile Befestigung sowie eine exakte Ausrichtung des ersten Abschirmelements und kann auf einfache Weise ohne zusätzliche Befestigungsmittel realisiert werden.

Vorteilhafterweise ist die magnetische Abschirmanordnung zumindest auf einer axialen Seite des Wiegand-Sensors in Umfangsrichtung ringabschnittförmig ausgebildet, sodass die magnetische Abschirmanordnung nur einen Statoreinheit-Ausschnitt umschließt, in dem der Wiegand-Sensor angeordnet ist. Die magnetische Abschirmanordnung ist also nur lokal in der Umgebung des Wiegand-Sensors vorgesehen. Für die magnetische Abschirmanordnung Ist folglich nur wenig magnetisches Material erforderlich, das schwergewichtig und teuer ist. Durch die kompakte Ausführung der magnetischen Abschirmanordnung kann somit ein leichtgewichtiges und preisgünstiges Drehwinkelmesssystem hergestellt werden.

In einer vorteilhaften Ausführung der Erfindung weist die magnetische Abschirmanordnung Abschirmelement auf, die den Wiegand-Sensor in einer Transversalebene umschließen. Die magnetische Abschirmanordnung umschließt den Wiegand-Sensor also neben der radialen Innenseite und der radialen Außenseite zusätzlich auch auf den beiden in Umfangsrichtung gegenüberstehenden lateralen Seiten. Der Wiegand-Sensor ist somit in allen drei Raumrichtungen von der magnetischen Abschirmanordnung umschlossen. Dies ermöglicht eine besonders zuverlässige Abschirmung des Wiegand-Sensors gegenüber externen magnetischen Störfelder und somit eine störungsfreie Erfassung der Drehbewegung der Welle.

Vorteilhafterweise weist die Multiturn-Sensoreinheit einen Hall-Sensor auf und weist die magnetische Abschirmanordnung Abschirmelemente auf, die den Hall-Sensor in einer Sagittalebene umschließen. Der Hall-Sensor erlaubt eine einfache Bestimmung der Drehrichtung der Welle. Dadurch, dass die magnetische Abschirmanordnung den Hall-Sensor in einer Sagittalebene umschließt, also den Hall-Sensor auf seiner radialen Innenseite und seiner radialen Außenseite sowie auf seiner axialen Oberseite und auf seiner axialen Unterseite umschließt, werden externe magnetische Störfelder über die magnetische Abschirmanordnung um den Hall-Sensor herumgeführt. Dies ermöglicht eine störungsfreie Erfassung der Drehbewegung der Welle.

Vorzugsweise weist die Rotoreinheit vier gleichmäßig entlang des Umfangs verteilte Sensormagnete auf. Hierdurch können von dem Wiegand-Sensor bereits halbe Umdrehungen der Welle erfasst werden, wodurch eine zuverlässige Erfassung der Drehbewegung der Welle ermöglicht wird.

In einer bevorzugten Ausführung der Erfindung ist die Welle eine Hohlwelle. Das erfindungsgemäße Drehwinkelmesssystem ist Insbesondere auch für die Erfassung der Drehbewegung einer Hohlwelle geeignet, bei der eine konventionelle Anordnung der Sensorik an einem axialen Ende der Welle nicht ohne besondere Vorkehrungen möglich ist. Vorteilhafterweise ist eine kapazitive Singleturn-Sensoreinheit zur Erfassung von Wellen-Teildrehungen vorgesehen, wobei ein erstes Singleturn-Sensorelement an der Rotoreinheit angeordnet ist und ein zweites Singleturn-Sensorelement an der Statoreinheit angeordnet ist. Die kapazitive Singleturn-Sensoreinheit ist auf einfache Weise in das Drehwinkelmesssystem integrierbar und ermöglicht eine besonders exakte Erfassung der Wellen-Drehbewegung.

Zwei Ausführungsbeispiele eines erfindungsgemäßen Drehwinkelmesssystems werden nachfolgend anhand der beigefügten Figuren beschrieben, wobei
Figur 1 eine Schnittdarstellung eines ersten Ausführungsbeispiels eines erfindungsgemäßen Drehwinkelmesssystems zeigt, wobei das Drehwinkelmesssystem entlang einer Sagittalebene geschnitten ist,

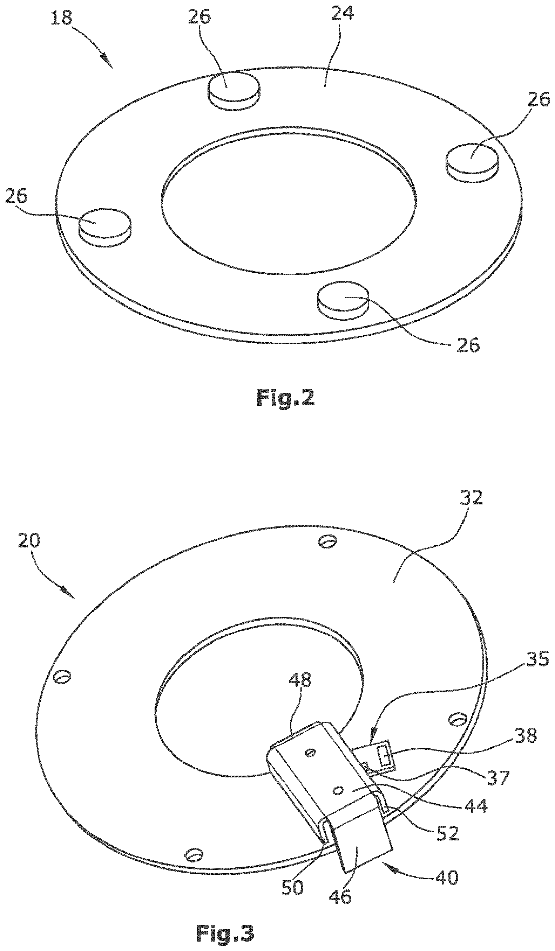

Figur 2 eine perspektivische Darstellung der axialen Oberseite einer Rotoreinheit des Drehwinkelmesssystems aus Figur 1 zeigt,
Figur 3 eine perspektivische Darstellung der axialen Unterseite einer Statoreinheit mit einem ersten Abschirmelement des Drehwinkelmesssystems aus Figur 1 zeigt,
Figur 4 eine Schnittdarstellung eines zweiten Ausführungsbeispiels eines erfindungsgemäßen Drehwinkelmesssystems zeigt, wobei das Drehwinkelmesssystem entlang einer Sagittalebene geschnitten ist, und

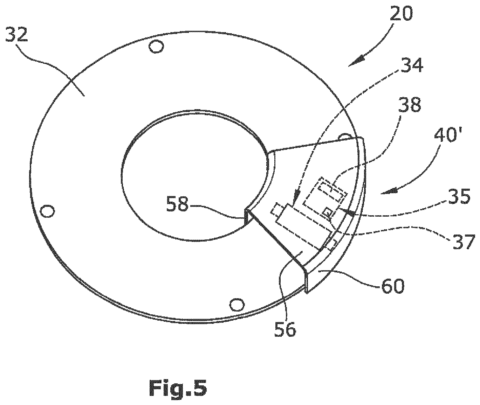

Figur 5 eine perspektivische Darstellung der axialen Unterseite einer Statoreinheit mit einem ersten Abschirmelement des Drehwinkelmesssystems aus Figur 4 zeigt.

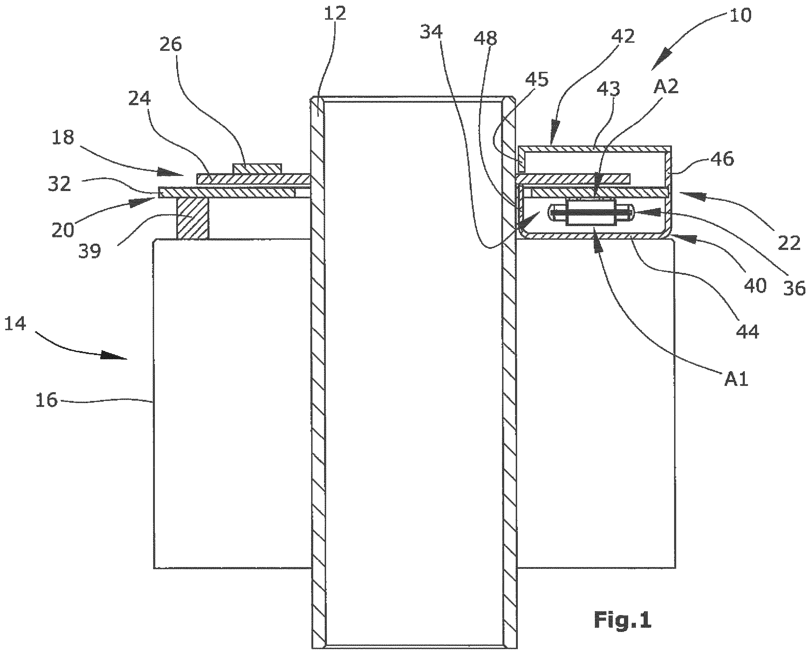

Die Figur 1 zeigt ein Drehwinkelmesssystem 10 zur Erfassung der Drehbewegung einer Welle 12. Die Welle 12 ist im vorliegenden Ausführungsbeispiel eine Hohlwelle, die sich im Wesentlichen in axialer Richtung erstreckt und von einem Antriebsmotor 14 mit einem statischen Motorgehäuse 16 angetrieben wird. Das Drehwinkelmesssystem 10 umfasst eine Rotoreinheit 18, eine Statoreinheit 20 und eine magnetische Abschirmanordnung 22.

Die Rotoreinheit 18 weist eine Rotorplatine 24 auf, die die Welle 12 radial umschließt und direkt an der Welle 12 befestigt ist. Die Rotoreinheit 18 ist somit drehfest mit der Welle 12 verbunden. Auf der Rotorplatine 24 sind vier gleichmäßig entlang ihres Umfangs verteilte Sensormagnete 26 angeordnet.

Die Statoreinheit 20 weist eine Statorplatine 32 auf, die die Welle 12 radial umschließt. Auf der Statorplatine 32 ist radial beabstandet zu der Welle 12 eine Multiturn-Sensoreinheit 34 angeordnet, die einen Wiegand-Sensor 36 und einen integrierten Schaltkreis 35 mit einer Auswerteeinheit 38 und einem Hall-Sensor 37 aufweist. Der integrierte Schaltkreis 35 umfasst ferner eine nicht näher dargestellte Steuerlogik und eine nicht näher dargestellte Energieverwaltung, die einen energieautarken Betrieb der Multiturn-Sensoreinheit 34 über die aus dem Wiegand-Sensor 36 gewonnene elektrische Energie ermöglichen. Die Auswerteeinheit 38 ist ferner signaltechnisch mit einem nicht näher gezeigten nicht-flüchtigen Datenspeicher verbunden, in dem ein Umdrehungs-Zählwert von der Auswerteeinheit 38 abgespeichert und ausgelesen wird. Die grundlegende Funktionsweise der Multiturn-Sensoreinheit 34 kann im Wesentlichen der DE 102 59 223 B3 entnommen werden, auf die in diesem Zusammenhang explizit verwiesen wird.

Die Multiturn-Sensoreinheit 34 ist radial derart positioniert, dass der Wiegand-Sensor 36 bei einer Rotation der Welle 12 die Magnetfelder der Sensormagnete 26 erfasst, die mit der Welle 12 mitdrehen und somit an dem Wiegand-Sensor 36 vorbeigeführt werden. Die Statorplatine 32 ist über mehrere Stator-Befestigungsmittel 39 feststehend an dem statischen Motorgehäuse 16 befestigt.

Die magnetische Abschirmanordnung 22 besteht aus einem Material mit einer hohen magnetischen Permeabilität, beispielweise aus Eisen. Die magnetische Abschirmanordnung 22 ist im vorliegenden Ausführungsbeispiel zweiteilig ausgeführt. Ein erstes Abschirmelement 40 ist im Wesentlichen trogförmig ausgebildet und weist eine Bodenwand 44, zwei radial gegenüberstehende Stirnwände 46,48 und zwei in Umfangsrichtung gegenüberstehende Seitenwände 50,52 auf.

Die Bodenwand 44 erstreckt sich im Wesentlichen in einer Transversalebene und ist auf der von der Rotoreinheit 18 abgewandten ersten axialen Seite A1, hier die axiale Unterseite, des Wiegand-Sensors 36 angeordnet. Die Stirnwände 46,48 erstrecken sich jeweils im Wesentlichen in einer Frontalebene. Die erste Stirnwand 46 ist auf der radialen Außenseite des Wiegand-Sensors 36 angeordnet und die zweite Stirnwand 48 ist auf der radialen Innenseite des Wiegand-Sensors 36 angeordnet. Die zweite Stirnwand 48 erstreckt sich in axialer Richtung von der Bodenwand 44 bis an die axiale Unterseite der Rotorplatine 24, berührt die Rotorplatine 24 aber nicht. Die erste Stirnwand 46 erstreckt sich in axialer Richtung ausgehend von der Bodenwand 44 und ragt axial über die axiale Oberseite der Rotorplatine 24 und über die Sensormagnete 26 hinaus. Die Seitenwände 50,52 erstrecken sich jeweils im Wesentlichen in einer Sagittalebene. Die Seitenwände 50,52 erstrecken sich in axialer Richtung jeweils von der Bodenwand 44 bis an die axiale Unterseite der Statorplatine 32. Die erste Seitenwand 50 ist auf einer ersten lateralen Seite des Wiegand-Sensors 36 angeordnet und die zweite Seitenwand 52 ist auf der in Umfangsrichtung gegenüberliegenden zweiten lateralen Seite des Wiegand-Sensors 36 angeordnet. Das erste Abschirmelement 40 ist somit in Umfangsrichtung ringabschnittförmig ausgebildet und umschließt nur einen Ausschnitt der Statoreinheit 20 in dem der Wiegand-Sensor 36 angeordnet ist.

Das erste Abschirmelement 40 umschließt den Wiegand-Sensor 36 sowohl auf beiden radialen Seiten als auch auf beiden lateralen Seiten und umschließt den Wiegand-Sensor 36 somit im Wesentlichen vollständig in einer Transversalebene. Ferner umschließt das erste Abschirmelement 40 den Wiegand-Sensor 36 auch auf seiner ersten axialen Seite A1. An dem von der Bodenwand 44 abgewandten axialen Ende der ersten Stirnwand 46 ist ein zweites Abschirmelement 42 befestigt. Das zweite Abschirmelement 42 weist eine sich im Wesentlichen in einer Transversalebene erstreckende erste Abschirmelement-Wand 43 und eine an die radiale Innenseite der ersten Abschirmelement-Wand 43 anschließende und vertikal nach unten gerichtete zweite Abschirmelement-Wand 45 auf. Die erste Abschirmelement-Wand 43 erstreckt sich in radialer Richtung von der ersten Stirnwand 46 bis an die Welle 12, berührt die Welle 12 aber nicht. Die zweite Abschirmelement-Wand 45 erstreckt sich in vertikaler Richtung von der erste Abschirmelement-Wand 43 bis an die Rotorplatine 24, berührt die Rotorplatine 24 aber nicht. Das zweite Abschirmelement 42 umschließt den Wiegand-Sensor 36 somit auf seiner zweiten axialen Seite A2. Die magnetische Abschirmanordnung 22 mit den beiden Abschirmelementen 40,42 umschließt den Wiegand-Sensor 36 auf beiden radialen Seiten sowie auf beiden axialen Seiten A1,A2, und umschließt den Wiegand-Sensor 36 somit in einer Sagittalebene.

Zur Verbesserung der Winkelauflösung umfasst das Drehwinkelmesssystems 10 eine nicht näher dargestellte kapazitive Singleturn-Sensoreinheit mit einem ersten Singleturn-Sensorelement, das an der axialen Unterseite der Rotoreinheit 18 angeordnet ist, und mit einem zweiten Sensorelement, das an der axialen Oberseite der Statoreinheit 20 angeordnet ist. Das Drehwinkelmesssystems 10 weist ferner eine nicht näher dargestellte zentrale Logikeinheit auf, die signaltechnisch mit der Multlturn-Sensoreinheit 34 und der Singleturn-Sensoreinheit verbunden ist, um sowohl die absolute Anzahl der Wellendrehungen, als auch den aktuellen relativen Drehwinkel der Welle zu bestimmen. Die zentrale Logikeinheit kann beispielsweise durch einen Mikrocontroller oder durch ein sogenanntes "Field Programmable Gate Array" (FPGA) gebildet sein.

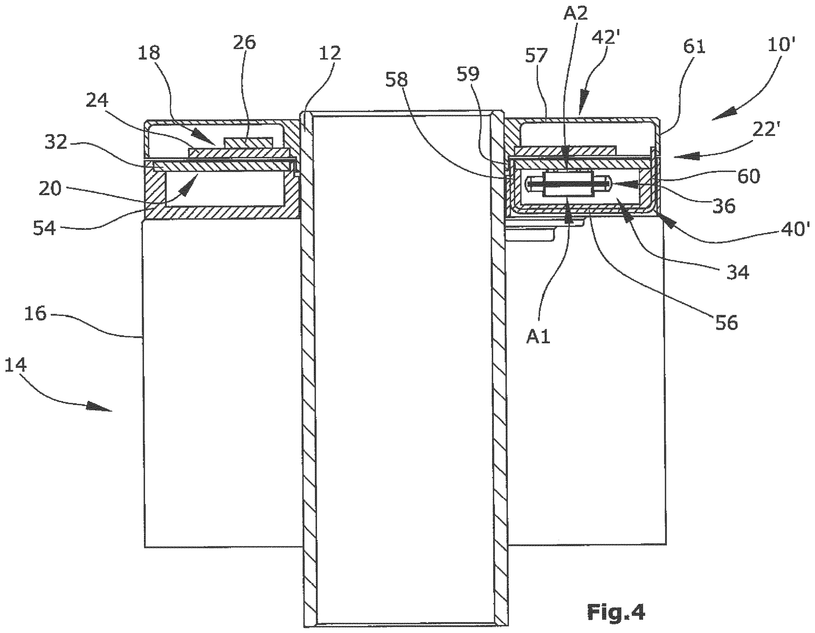

Die Figur 4 zeigt ein alternatives erfindungsgemäßes Drehwinkelmesssystem 10'. Bei dem Drehwinkelmesssystem 10' ist die feststehende Statoreinheit 20 in einem ringförmigen Statorgehäuse 54 angeordnet, das im vorliegenden Ausführungsbeispiels aus Kunststoff besteht und an dem Motorgehäuse 16 befestigt ist. Das Statorgehäuse 54 umschließt die Welle 12 radial und weist ein im Wesentlichen U-förmiges Profil auf.

Das zweite Abschirmelement 42' ist ringförmig ausgebildet und weist ein im Wesentlichen U-förmiges Profil auf, mit einer sich im Wesentlichen in einer Transversalebene erstreckenden Deckelwand 57, einer radial innenliegenden Innenwand 59 und einer radial außenliegenden Außenwand 61. Das zweite Abschirmelement 42' ist direkt an der Welle 12 befestigt und somit drehfest mit der Welle 12 verbunden. In dem zweiten Abschirmelement 42' ist die Rotoreinheit 18 angeordnet und an dem zweiten Abschirmelement 42' befestigt. Das zweite Abschirmelement 42' ist auf der zweiten axialen Seite A2 des Wiegand-Sensors 36 angeordnet und umschließt den Wiegand-Sensor 36 auf der zweiten axialen Seite A2.

Das erste Abschirmelement 40' ist ringsektorförmig ausgebildet und weist ein im Wesentlichen U-förmiges Profil auf, mit einer sich im Wesentlichen in einer Transversalebene erstreckenden Bodenwand 56, einer radial innenliegenden Innenwand 58 und einer radial außenliegenden Außenwand 60. Das erste Abschirmelement 40' ist derart ausgebildet und in dem Statorgehäuse 54 angeordnet, dass es nur einen Ausschnitt der Statoreinheit 20 umschließt, in dem der Wiegand-Sensor 36 und der integrierte Schaltkreis 35 mit dem Hall-Sensor 37 angeordnet sind. Die Innenwand 58 des ersten Abschirmelements 40' umschließt die radiale Innenseite des Wiegand-Sensors 36 und überlappt in axialer Richtung mit der Innenwand 59 des zweiten Abschirmelements 42'. Die Außenwand 60 des ersten Abschirmelements 40' umschließt die radiale Außenseite des Wiegand-Sensors 36 und überlappt in axialer Richtung mit der Außenwand 61 des zweiten Abschirmelements 42'. Die Bodenwand 56 des ersten Abschirmelements 40' umschließt die erste axiale Seite A1 des Wiegand-Sensors 36.

Die magnetische Abschirmanordnung 22' umschließt den Wiegand-Sensor 36 somit auf beiden radialen Seiten sowie auf beiden axialen Seiten A1,A2 und umschließt den Wiegand-Sensor 36 somit vollständig in einer Sagittalebene. Ferner umschließt die magnetische Abschirmanordnung 22' den Hall-Sensor 37 auf seiner radialen Innenseite und seiner radialen Außenseite sowie auf seiner axialen Oberseite und seiner axialen Unterseite und somit vollständig in einer Sagittalebene.

### Bezugszeichenliste

- 10;10': Drehwinkelmesssystem
- 12: Welle
- 14: Antriebsmotor
- 16: Motorgehäuse
- 18: Rotoreinheit
- 20: Statoreinheit
- 22;22': magnetische Abschirmanordnung
- 24: Rotorplatine
- 26: Sensormagnete
- 32: Statorplatine
- 34: Multiturn-Sensoreinheit
- 35: integrierter Schaltkreis
- 36: Wiegand-Sensor
- 37: Hall-Sensor
- 38: Auswerteeinheit
- 39: Stator-Befestigungsmittel
- 40;40': erstes Abschirmelement
- 42;42': zweites Abschirmelement
- 43: erste Abschirmelement-Wand
- 44: Bodenwand
- 45: zweite Abschirmelement-Wand
- 46: erste Stirnwand
- 48: zweite Stirnwand
- 50: erste Seitenwand
- 52: zweite Seitenwand
- 54: Statorgehäuse
- 56: Bodenwand
- 57: Deckelwand
- 58: Innenwand
- 59: Innenwand
- 60: Außenwand
- 61: Außenwand
- A1: erste axiale Seite
- A2: zweite axiale Seite

## Patentansprüche

1. Drehwinkelmesssystem (10;10') zur Erfassung einer Drehbewegung einer Welle (12), mit
der Welle (12), die sich im Wesentlichen in axialer Richtung erstreckt, einer mit der Welle (12) drehfest verbundenen und die Welle (12) radial umschließenden Rotoreinheit (18), die mindestens einen Sensormagnet (24) aufweist,
einer feststehenden Statoreinheit (20) mit einer radial beabstandet zur Welle (12) angeordneten Multiturn-Sensoreinheit (34) mit mindestens einem Wiegand-Sensor (36), die zur Erfassung von Wellenumdrehungen funktional mit dem Sensormagnet (24) zusammenwirkt, und
mindestens einer magnetischen Abschirmanordnung (22;22') für den mindestens einen Wiegand-Sensor (36), die aus einem Material mit einer hohen magnetischen Permeabilität besteht,
**dadurch gekennzeichnet, dass**
die mindestens eine magnetische Abschirmanordnung (22;22') Abschirmelemente (40,42;40',42') aufweist, die den mindestens einen Wiegand-Sensor (36) auf seiner radialen Innenseite, auf seiner radialen Außenseite, auf seiner ersten axialen Seite (A1) und auf seiner zweiten axialen Seite (A2) umschließen.

2. Drehwinkelmesssystem (10;10') nach Anspruch 1, wobei die magnetische Abschirmanordnung (22;22') ein erstes Abschirmelement (40;40') aufweist, das den Wiegand-Sensor (36) auf der ersten axialen Seite (A1) umschließt, und ein zweites Abschirmelement (42;42') aufweist, das den Wiegand-Sensor (36) auf der der ersten axialen Seite (A1) gegenüberliegenden zweiten axialen Seite (A2) umschließt.

3. Drehwinkelmesssystem (10') nach Anspruch 2, wobei das erste Abschirmelement (40') feststehend angeordnet ist und das zweite Abschirmelement (42') drehfest mit der Welle (12) verbunden ist.

4. Drehwinkelmesssystem (10) nach Anspruch 2, wobei beide Abschirmelemente (40,42) feststehend angeordnet und direkt miteinander verbunden sind.

5. Drehwinkelmesssystem (10') nach Anspruch 2 oder 3, wobei ein feststehendes Statorgehäuse (54) vorgesehen ist, das aus einem nicht magnetisierbaren Material besteht und in dem die Statoreinheit (20) und das feststehende erste Abschirmelement (40') angeordnet sind.

6. Drehwinkelmesssystem (10;10') nach einem der vorigen Ansprüche, wobei die magnetische Abschirmanordnung (22;22') zumindest auf einer axialen Seite (A1) des Wiegand-Sensors (36) in Umfangsrichtung ringabschnittförmig ausgebildet ist, sodass die magnetische Abschirmanordnung (22;22') nur einen Statoreinheit-Ausschnitt umschließt, in dem der Wiegand-Sensor (36) angeordnet ist.

7. Drehwinkelmesssystem (10) nach einem der vorigen Ansprüche, wobei die magnetische Abschirmanordnung (22) Abschirmelemente (40,42) aufweist, die den Wiegand-Sensor (36) auf seiner radialen Innenseite, auf seiner radialen Außenseite, sowie auf seinen beiden in Umfangsrichtung gegenüberstehenden lateralen Seiten umschließen.

8. Drehwinkelmesssystem (10') nach einem der vorigen Ansprüche, wobei die Multiturn-Sensoreinheit (34) einen Hall-Sensor (37) aufweist und wobei die magnetische Abschirmanordnung (22') Abschirmelemente (40',42') aufweist, die den Hall-Sensor (37) auf seiner radialen Innenseite, auf seiner radialen Außenseite, auf seiner ersten axialen Seite (A1) und auf seiner zweiten axialen Seite (A2) umschließen.

9. Drehwinkelmesssystem (10;10') nach einem der vorigen Ansprüche, wobei die Rotoreinheit (18) vier gleichmäßig entlang des Umfangs verteilte Sensormagnete (26) aufweist.

10. Drehwinkelmesssystem (10;10') nach einem der vorigen Ansprüche, wobei die Welle (12) eine Hohlwelle ist.

11. Drehwinkelmesssystem (10;10') nach einem der vorigen Ansprüche, wobei eine kapazitive Singleturn-Sensoreinheit zur Erfassung von Wellen-Teildrehungen vorgesehen ist, wobei ein erstes Singleturn-Sensorelement an der Rotoreinheit (18) angeordnet ist und ein zweites Singleturn-Sensorelement an der Statoreinheit (20) angeordnet ist.

## Claims

1. A rotation angle measurement system (10; 10') for detecting a rotation of a shaft (12), comprising
the shaft (12) essentially extending in an axial direction, a rotor unit (18) connected to the shaft (12) for rotating therewith and radially surrounding the shaft (12) and including at least one sensor magnet (24),
a stationary stator unit (20) having a multi-turn sensor unit (34) arranged radially spaced apart from the shaft (12) and including at least one Wiegand sensor (36), which multi-turn sensor unit functionally interacts with the sensor magnet (24) to detect shaft revolutions, and
at least one magnetic shielding assembly (22; 22') for the at least one Wiegand sensor (36), which shielding assembly is made from a material having a high magnetic permeability,
**characterized in that**
the at least one magnetic shielding assembly (22; 22') comprises shielding elements (40, 42; 40', 42') which surround the at least one Wiegand sensor (36) on a radial inside thereof, on a radial outside thereof, on a first axial side (A1) thereof and on a second axial side (A2) thereof.

2. The rotation angle measurement system (10; 10') according to claim 1, wherein the magnetic shielding assembly (22; 22') comprises a first shielding element (40; 40') which surrounds the Wiegand sensor (36) on the first axial side (A1), and a second shielding element (42; 42') which surrounds the Wiegand sensor (36) on the second axial side (A2) opposite the first axial side (A1).

3. The rotation angle measurement system (10') according to claim 2, wherein the first shielding element (40') is arranged in a stationary manner and the second shielding element (42') is connected to the shaft (12) for rotating therewith.

4. The rotation angle measurement system (10) according to claim 2, wherein both shielding elements (40, 42) are arranged in a stationary manner and are directly connected to each other.

5. The rotation angle measurement system (10') according to claim 2 or 3, wherein a stationary stator housing (54) is provided which is made from a non-magnetizable material and in which the stator unit (20) and the first stationary shielding element (40') are arranged.

6. The rotation angle measurement system (10; 10') according to any one of the preceding claims, wherein the magnetic shielding assembly (22; 22') is configured as a ring segment in the circumferential direction at least on an axial side (A1) of the Wiegand sensor (36) such that the magnetic shielding assembly (22; 22') surrounds only a stator unit section in which the Wiegand sensor (36) is arranged.

7. The rotation angle measurement system (10) according to any one of the preceding claims, wherein the magnetic shielding assembly (22) comprises shielding elements (40, 42) which surround the Wiegand sensor (36) on the radial inside thereof, on the radial outside thereof as well as on both lateral sides thereof opposite each other in the circumferential direction.

8. The rotation angle measurement system (10') according to any one of the preceding claims, wherein the multi-turn sensor unit (34) comprises a Hall sensor (37) and wherein the magnetic shielding assembly (22') comprises shielding elements (40', 42') which surround the Hall sensor (37) on the radial inside thereof, on the radial outside thereof, on the first axial side (A1) thereof and on the second axial side (A2) thereof.

9. The rotation angle measurement system (10; 10') according to any one of the preceding claims, wherein the rotor unit (18) comprises four sensor magnets uniformly distributed along the circumference.

10. The rotation angle measurement system (10; 10') according to any one of the preceding claims, wherein the shaft (12) is a hollow shaft.

11. The rotation angle measurement system (10; 10') according to any one of the preceding claims, wherein a capacitive single-turn unit for detecting partial rotations of the shaft is provided, wherein a first single-turn sensor element is arranged at the rotor unit (18) and a second single-turn sensor element is arranged at the stator unit (20).

## Revendications

1. Système de détection d'angle de rotation (10 ; 10') pour détecter un mouvement de rotation d'un arbre (12), avec
une unité de rotor (18) fixée en rotation à l'arbre (12) et entourant radialement l'arbre (12), qui présente au moins un aimant de capteur (24),
une unité de stator fixe (20) avec une unité de capteur multitours (34) disposée à distance radiale de l'arbre (12) avec au moins un capteur Wiegand (36), qui coopère de manière fonctionnelle avec l'aimant de capteur (24) pour détecter les rotations de l'arbre, et
au moins un dispositif de blindage magnétique (22 ; 22') pour le au moins un capteur de Wiegand (36), qui est constitué d'un matériau ayant une perméabilité magnétique haute,
**caractérisé en ce que**
le au moins un dispositif de blindage magnétique (22 ; 22') présente des éléments de blindage (40, 42 ; 40', 42') qui entourent le au moins un capteur de Wiegand (36) dans un plan sagittal.

2. Système de détection d'angle de rotation (10 ; 10') selon la revendication 1, dans lequel l'ensemble de blindage magnétique (22 ; 22') comprend un premier élément de blindage (40 ; 40') qui entoure le capteur de Wiegand (36) sur un premier côté axial (A1), et un deuxième élément de blindage (42 ; 42') qui entoure le capteur de Wiegand (36) sur un deuxième côté axial (A2) opposé au premier côté axial (A1).

3. Système de détection d'angle de rotation (10') selon la revendication 2, dans lequel le premier élément de blindage (40') est disposé de manière fixe et le deuxième élément de blindage (42') est relié à l'arbre (12) sans pouvoir tourner.

4. Système de détection d'angle de rotation (10) selon la revendication 2, dans lequel les deux éléments de blindage (40, 42) sont disposés de manière fixe et sont directement reliés entre eux.

5. Système de détection d'angle de rotation (10') selon la revendication 2 ou 3, dans lequel il est prévu un boîtier de stator fixe (54) qui est constitué d'un matériau non magnétisable et dans lequel sont disposé l'unité de stator (20) et le premier élément de blindage fixe (40').

6. Système de détection d'angle de rotation (10 ; 10') selon l'une des revendications précédentes, dans lequel l'agencement de blindage magnétique (22 ; 22') est réalisé en forme de section annulaire dans la direction circonférentielle au moins sur un côté axial (A1) du capteur de Wiegand (36), de sorte que l'agencement de blindage magnétique (22 ; 22') n'entoure qu'une section d'unité de stator dans laquelle est disposé le capteur de Wiegand (36).

7. Système de détection d'angle de rotation (10) selon l'une des revendications précédentes, dans lequel l'ensemble de blindage magnétique (22) comporte des éléments de blindage (40, 42) qui entourent le capteur de Wiegand (36) dans un plan transversal.

8. Système de détection d'angle de rotation (10') selon l'une des revendications précédentes, dans lequel l'unité de détection multitour (34) comprend un capteur à effet Hall (37) et dans lequel l'ensemble de blindage magnétique (22') comprend des éléments de blindage (40', 42') entourant le capteur à effet Hall (37) dans un plan sagittal.

9. Système de détection d'angle de rotation (10 ; 10') selon l'une quelconque des revendications précédentes, dans lequel l'ensemble rotor (18) comprend quatre aimants de détection (26) répartis uniformément le long de la circonférence.

10. Système de détection d'angle de rotation (10;10') selon l'une quelconque des revendications précédentes, dans lequel l'arbre (12) est un arbre creux.

11. Système de détection d'angle de rotation (10 ; 10') selon l'une des revendications précédentes, dans lequel il est prévu une unité de détection capacitive monotour pour détecter des rotations partielles de l'arbre, un premier élément de détection monotour est disposé sur l'unité de rotor (18) et un deuxième élément de détection monotour est disposé sur l'unité de stator (20).
